# EUROPEAN PATENT APPLICATION

(11) **EP 2 871 617 A1**
(43) Date of publication of application: **13.05.2015**
(21) Application number: 13199728.0
(22) Date of filing: 27.12.2013
(51) Int. Cl.: G07F 11/16, G07F 9/10

(54) **Vending machine, especially for frozen products**

(30) Priority: 08.11.2013 PL 12252413 U
(71) Applicant: Bronowski, Marek, 04-937 Warssawa (PL)
(72) Inventor: Bronowski, Marek, 04-937 Warssawa (PL)
(74) Representative: Sawicki, Igor

(57) **Abstract**

The vending machine according to embodiment, consisting of gripping device for products and cooling chamber with cover, is characteristic in that, the gripping device consists of four fingers (1) mounted in the head (3), extension arm touching sensor (4), "stop" sensor (5) with on-off switch (6), ending switch (7), guiding holder (8) and fixing plate (9), whereas the whole set is situated axially on the telescopic extension arm (10) and its housing (11), whilst the sectional cover (14) of cooling chamber (15), consists of at least two flaps (16) having possibility or rotation along one of its sides, built-in the frame of sectional cover (14) of cooling chamber (15), whereas each flap (16) is precisely situated over the row of products (17), situated in the cooling chamber (15), and is fitted with an independent drive (18).

## Description

The subject of invention is a vending machine, especially for frozen products.

In vending machines, especially for frozen products, the fundamental elements drawing attention are solutions of the gripping devices, taking out given product from cooling chamber, as well as the method of opening the cover of container (cooling chamber) with frozen products.

The known solution of Fastcorp Corporation vending machine for frozen products comes from the description to patent application US 2005/0050852, in which the vacuum grips are used. At the time of receiving product selection signal, the electric power unit is opening the cover of cooling chamber (freezer) to its vertical position, and the carriage with gripping device begins to move, to take position over selected product. Then the suction pump is started, and sucking-in suction nozzle is lowered. Upon touching the product, the sensor situated on suction nozzle causes lifting of suction nozzle with the product, and traveling of carriage beyond the outline of cooling chamber to the feed chute - in the position "over the chute". Then, the suction pump stops, and cutting off the vacuum, solenoid valve opens, product falls to the feed chute, and electric power unit is closing the cooling chamber cover.

The disadvantage of this solution is a complicated structure of gripper, entailing the use of the expensive components (vacuum pump with high efficiency , pressure control, or other pressure sensor, the solenoid valve, suction nozzle, pressure hoses etc), as well as the method of opening at once the whole cover of cooling chamber (freezer). This requires the high and rigid housing, which in turn has an impact on the price of machine. Moreover, the long procedure of opening the cover, and taking out the product results in the rise of cooling chamber temperature, formation of frost, and increased electric energy consumption.

Proposed vending machine consists of cooling chamber with sectional cover with flaps, fingers gripping device mounted in the head, extension arm touching sensor , "stop" sensor with on-off switch, ending switch, guiding holder and fixing plate, everything monted axially on the telescopic extension arm and its housing. Sectional cover of cooling chamber consists of at least two flaps having possibility or rotation along one of its sides (open and close), built-in the frame of sectional cover of cooling chamber.

Each flap is precisely situated over the row of products, situated in the cooling chamber, and is fitted with an independent drive.

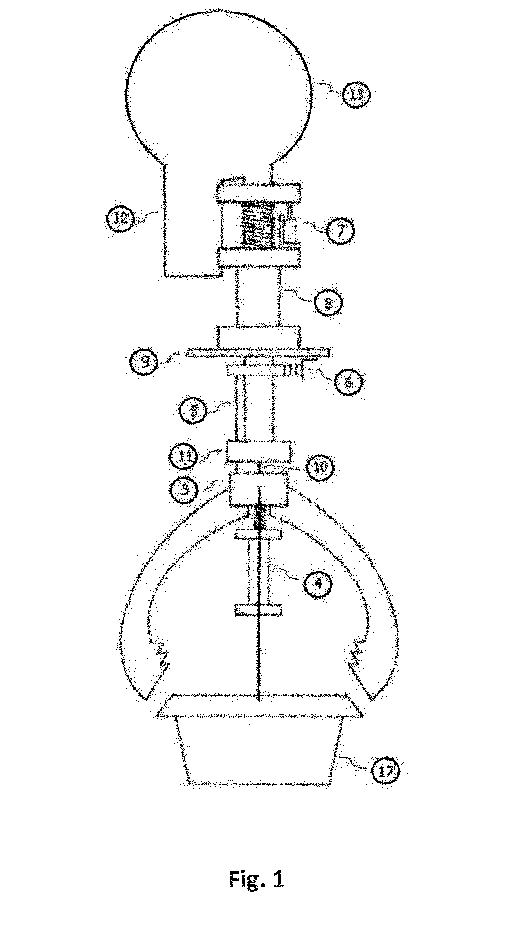

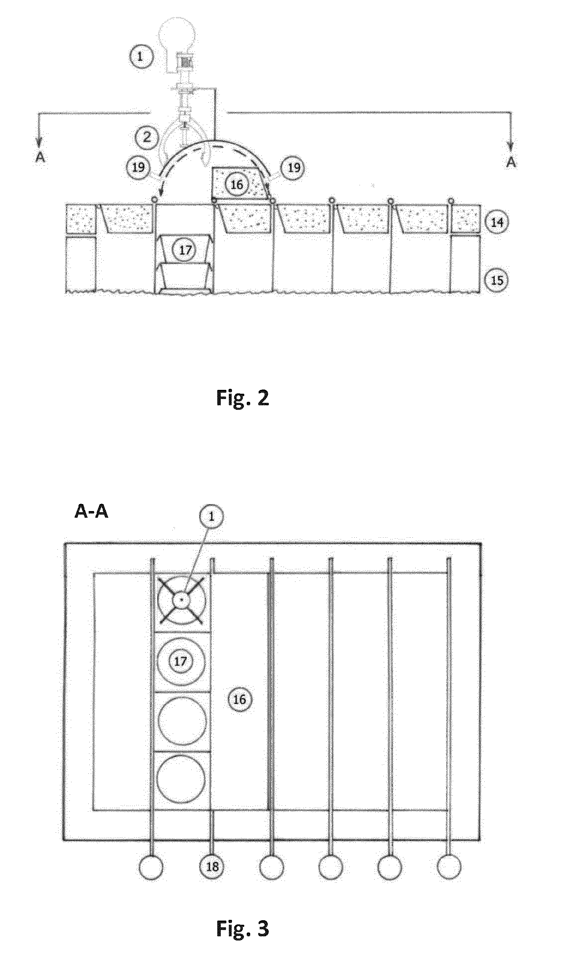

The subject of utility model is presented in the drawing, in which fig. 1 shows the view of gripping device for products, fig.2 shows a vending machine with the gripping device and upper part of cooling chamber, with sectional cover in cross-section shown, fig. 3 shows the vending machine with gripping device and upper fragment of cooling chamber with sectional cover shown in the top view.

The gripping device 1 consists of four fingers 2 mounted in the head 3, extension arm touching sensor 4, "stop" sensor 5 with on-off switch 6, ending switch 7, guiding holder 8 and as fixing plate 9. The whole set is axially mounted on telescopic extension arm 10 and its housing 11. The telescopic extension arm 10 is driven by electric power unit 12 through the string, wound on the drum 13. The gripping device 1 is made of stainless steel and polyamide. Sectional cover 14 of cooling chamber 15, consists of a few flaps 16, having possibility of rotation along one of its sides, and built-into the frame of sectional cover 14 of the cooling chamber 15.

Each flap 16 is precisely situated over the row of products 17, located in the cooling chamber 15, and is provided with independent drive 18, whereas the independent drive 18 can consist of electric power units with gears transmission driving individual flaps 16, or one electric power unit and a number of electromagnetic clutches. It could be all kinds of mechanical transmission or single-arm lever attached to flaps axis operated by moving carriage with gripping device.

Flaps 16 and frame of sectional cover are made of a insulating material, the external covering is made of coated metal, or stainless steel. The pivot pin of the flap 16 is made of stainless steel, supports of pivot pin are of polyamide. The products 17 in the cooling chamber 15, have to be placed in separated boxes, limited by walls. The sectional cover 14 is provided for the use in all vending machines with frozen or cooled products.

The operating principle of vending machine according to invention is as follows.

The gripping device 1 with telescopic extension arm 10 begins its operation upon the receipt of signal initiating dealing out the product 17. Usually it is a signal from coin slot, or product selection push-button in vending machine. After the receipt of signal closing of contacts on-off switch 6 controlling the telescopic extension arm 10, the telescopic extension arm 10 begins to pull out, and the fingers 2 of gripping device 1 begin their downward movement. The fingers 2 of gripping device 1 embrace the box with product 17 a moment before touching the lid of box with product 17 by the touching sensor 4 of telescopic extension arm 10. At the moment of touching the lid of box with product 17 by the touching sensor 4 of telescopic extension arm 10, the contacts of ending switch open 7 and begins the upward movement of telescopic extension arm 10 with product 17 kept by fingers of gripping device 1. After approaching the head 3 of gripping device 1 to the "stop" sensor 5, the contacts of on-off switch 6 of the telescopic extension arm are opening, and the gripping device 1 stops in the position - "keeping the product". It is a position enabling travel of the carriage with gripping device 1 fixed on fixing plate 9, up to the place where product 17, has to be released from the fingers of gripping device 1, and finds its way to the delivery chute of vending machine. The upward movement is causing opening of gripping device 1 fingers, by pressing down the head 3 by the touching sensor 4 to the housing of extension arm 10. After releasing of the product 17, the gripping device 1 with carriage is moving to the position, in which it is waiting for giving out of the next product.

The flap 16 of sectional cover 14, begins its operation at the moment of stopping over it, the carriage with gripping device 1 of vending machine. The signal for stopping the carriage is closing the contacts of flap drive 18 and the flap 16, begins to open. The sensor 19 of flap opening/closing, stopping the drive only after full opening of flap 16 is situated on the carriage of machine. This is indispensable, since only full opening of flap 16 enables gripping device 1 to collect the product 17.

Beginning of the flap 16 closing process, takes place at the moment when the contacts of on-off switch 6 on telescopic extension arm 10 are opened, and gripping device 1 is stopped in the position "keeping the product". Similarly, like during flap 16 opening operation, the sensor 19 of flap 16 opening/closing is watching over the full operation of closing the flap 16, which stops only after full closure of flap 16. This is indispensable, since ajar flap 16, would result in ice formation, or outright locking it during the attempt of opening. The subsequent opening of one of the flaps 16, takes place after stopping over it, the carriage with gripping device 1 of vending machine.

The advantage of vending machine according to utility model is a low price of gripping device, which is as reliable as that of vacuum type, however being significantly lighter, and features a lower consumption of electric energy.

The gripping device according to the above solution can be applied in vending machines of any type as well, dealing out the products packed in boxes with lid. It should be especially useful for the products requiring low temperatures, where use of the typical vending machines with spiral feeders is not possible.

Next advantage of the vending machine, according to utility model, is an application of sectional flaps. This significantly reduces the time and surface of flap opening of the cooling chamber (opening of flap takes approximately 1.5 second, collecting of product maximum 18 seconds, closing of flap 1.5 second), and thereby reduces consumption of electricity by cooling chamber, and also results in reduction of frost accumulation in the cooling chamber (freezer).

## Claims

1. The vending machine according to embodiment, consisting of gripping device for products and cooling chamber with cover, is characteristic in that, the gripping device consists of four fingers **(1)** mounted in the head **(3),** extension arm touching sensor **(4),** "stop" sensor **(5)** with on-off switch **(6),** ending switch **(7),** guiding holder **(8)** and fixing plate **(9),** whereas the whole set is situated axially on the telescopic extension arm **(10)** and its housing **(11),** whilst the sectional cover **(14)** of cooling chamber **(15),** consists of at least two flaps **(16)** having possibility or rotation along one of its sides, built-in the frame of sectional cover **(14)** of cooling chamber **(15),** whereas each flap **(16)** is precisely situated over the row of products **(17),** situated in the cooling chamber **(15),** and is fitted with an independent drive **(18).**
